# EUROPÄISCHE PATENTSCHRIFT

(11) **EP 4 344 531 B1**
(45) Veröffentlichungstag und Bekanntmachung des Hinweises auf die Patenterteilung: **28.01.2026**
(21) Anmeldenummer: 23186369.7
(22) Anmeldetag: 19.07.2023
(51) Int. Cl.: A01D 41/14

(54) **LANDWIRTSCHAFTLICHE ERNTEMASCHINE**
AGRICULTURAL HARVESTER
RÉCOLTEUSE AGRICOLE

(30) Priorität: 29.09.2022 DE 102022125093
(43) Veröffentlichungstag der Anmeldung: 03.04.2024
(73) Patentinhaber: CLAAS Selbstfahrende Erntemaschinen GmbH, 33428 Harsewinkel (DE)
(72) Erfinder: Thiesmann, Waldemar, 49080 Osnabrück (DE); Bussmann, Christoph, 33428 Harsewinkel (DE); Cord-Kruse, Christian, 48231 Warendorf (DE); Neitemeier, Dennis, 59510 Lippetal (DE); Wielenberg, Andreas, 32049 Herford (DE); Füchtling, Christian, 48317 Drenstein Rinkerode (DE); Baumgarten, Joachim, 48361 Beelen (DE); Bormann, Bastian, 33334 Gütersloh (DE); Wilken, Andreas, 49143 Bissendorf (DE); Heufekes, Maik, 48147 Münster (DE)
(74) Vertreter: CLAAS Gruppe

(56) Entgegenhaltungen:
- EP-B1- 3 566 564
- DE-A1- 102020 203 524
- US-A1- 2020 077 584
- US-A1- 2022 240 446

## Beschreibung

Die vorliegende Erfindung betrifft eine landwirtschaftliche Erntemaschine mit einem Schneidwerk, das über eine landwirtschaftliche Fläche bewegt werden kann, um einen Pflanzenbestand darauf abzumähen, wie etwa einen Mähdrescher oder einen Feldhäcksler. Bei diesen Erntemaschinen ist das Schneidwerk typischerweise entlang der Vorderkante eines vorn an der Maschine montierten Erntevorsatzes angeordnet, der relativ zur Maschine in mehreren Freiheitsgraden bewegbar ist, um einerseits trotz Bodenunebenheiten einen für die Bodenstruktur wie für das Schneidwerk schädlichen Bodenkontakt zu vermeiden, andererseits aber auch Verluste an Erntegut zu minimieren, die sich unter anderem ergeben, wenn, z.B. bei liegendem Getreide unterhalb des Schneidwerks liegende Ähren nicht aufgenommen werden, oder wenn geschnittene Halme vor dem Schneidwerk zu Boden fallen und das Schneidwerk anschließend darüber hinweg fährt, ohne sie aufzunehmen.

Es ist z. B. aus EP 1 374 661 B1 bekannt, mit Hilfe von an der Unterseite eines Erntevorsatzes angebrachten Tastbügeln den Abstand des Erntevorsatzes vom Boden zu überwachen, um ihn laufend an einen Sollwert angleichen zu können. Dabei ist ein grundsätzliches Problem, dass der Tastbügel den Abstand zu einem Punkt am Boden erst dann erfassen kann, wenn das Schneidwerk ihn bereits passiert hat. Zwar bietet bei dem Erntevorsatz nach EP 1 374 661 B1 ein zweiter, in Fahrtrichtung versetzter Tastbügel die Möglichkeit, eine Entwicklung des Abstands von Boden zu erfassen; eine Vorhersage des Verlaufs der Bodenoberfläche vor der Schneidkante ist dennoch kaum möglich. Das Steuern der Lage des Erntevorsatzes so, dass Bodenkontakt möglichst vermieden, gleichzeitig aber das Erntegut möglichst vollständig aufgenommen wird oder andere Parameter wie etwa Energieverbrauch der Maschine, Reinigungsverluste oder dergleichen optimiert werden, ist daher eine komplexe Aufgabe, zu deren Lösung kein einheitliches Rezept existiert. Vielmehr sind diverse Steuerstrategien für jeweils unterschiedliche Anforderungen entwickelt worden, zwischen denen, wie in DE 10 2015 113 527 A1 beschrieben, ein Fahrer der Erntemaschine jeweils die seinen Anforderungen am besten entsprechende auswählen kann.

Jede dieser Steuerstrategien optimiert einen bestimmten Betriebsparameter der Maschine, wie etwa Schnittährenverluste, Spritzkörnerverluste, Kraftstoffverbrauch oder dergleichen. Der Fahrer hat aber das Problem, dass der jeweils in einer gegebenen Steuerstrategie optimierte Betriebsparameter im Allgemeinen nicht der einzige für ihn relevante ist. Es mag zwar wünschenswert sein, einen hohen Sollwert der Höhe über Boden zu wählen, um im Betrieb einen Bodenkontakt mit hoher Sicherheit zu verhindern; es ist aber unwirtschaftlich, wenn mit zu hohen Verlusten an Erntegut verbunden. Umgekehrt ist auch eine auf möglichst vollständiges Bergen des Ernteguts gerichtete Steuerstrategie unbefriedigend, wenn durch Bodenkontakte des Schneidwerks Verunreinigungen ins Erntegut gelangen, die dessen Marktwert beeinträchtigen. Wenn der Fahrer sich deshalb zwischen zwei in Frage kommenden Steuerstrategien nicht zu entscheiden weiß, ist die Wahrscheinlichkeit hoch, dass er gar keine Auswahl des Steuerparameters vornimmt und die Maschine mit an die aktuellen Einsatzbedingungen nicht ideal angepassten Einstellungen betrieben wird.

Die EP 3 566 564 B1 offenbart ein Fahrerassistenzsystem eines Mähdreschers, das unterschiedliche Steuerungsstrategien umfasst.

Aufgabe der Erfindung ist, eine Erntemaschine zu schaffen, die es dem Fahrer erleichtert, an die aktuellen Einsatzbedingungen angepasste Einstellungen vorzunehmen.

Die Aufgabe wird erfindungsgemäß gelöst, indem bei einer landwirtschaftlichen Erntemaschine mit einem Schneidwerk zum Schneiden von Erntegut und mit einem Fahrerassistenzsystem, wobei das Fahrerassistenzsystem einen Speicher, in dem Steuerungsstrategien für den Betrieb des Schneidwerks hinterlegt sind, und eine Rechenvorrichtung zum Steuern eines Schnittwinkels des Schneidwerks nach Maßgabe der in dem Speicher hinterlegten Steuerungsstrategien umfasst, die Rechenvorrichtung eingerichtet ist, wenigstens eine erste und eine zweite Steuerungsstrategie über eine Gewichtungsvariable miteinander zu verknüpfen, wobei die Gewichtungsvariable durch einen Fahrer einstellbar ist. Dies entbindet den Fahrer von der Notwendigkeit, zwischen zwei als nicht voll zu den aktuellen Einsatzbedingungen passend empfundenen - und voraussichtlich auch tatsächlich technisch nicht ideal passenden - Einstellungen zu wählen, sondern stattdessen einen Kompromiss zu treffen, von dem zu erwarten ist, dass er an die aktuellen Einsatzbedingungen besser angepasst ist als die ursprünglichen Steuerungsstrategien.

Das Verknüpfen der Steuerungsstrategien kann darin bestehen, dass ein erster Wert des Schnittwinkels nach der ersten Steuerungsstrategie festgelegt wird, ein zweiter Wert des Schnittwinkels nach der zweiten Steuerungsstrategie festgelegt wird und ein Soll-Schnittwinkel für das Schneidwerk anhand einer Rechenvorschrift als Funktion des ersten und des zweiten Werts des Schnittwinkels festgelegt wird, wobei die Gewichtungsvariable den Einfluss des ersten und des zweiten Werts auf das Ergebnis der Rechenvorschrift bestimmt. Insbesondere kann es sich bei der Rechenvorschrift um eine mit der Gewichtungsvariablen gewichtete Mittelwertbildung handeln.

Denkbar ist auch, dass das Verknüpfen darin besteht, einen ersten zum Einstellen am Schneidwerk zulässigen Extremwert des Schnittwinkels nach der ersten Steuerungsstrategie festzulegen, einen zweiten zum Einstellen am Schneidwerk zulässigen Wert des Schnittwinkels nach der zweiten Steuerungsstrategie festzulegen und den am Schneidwerk tatsächlich eingestellten Schnittwinkel anhand einer Rechenvorschrift als Funktion des ersten und des zweiten Extremwerts des Schnittwinkels festzulegen, wobei die Gewichtungsvariable den Einfluss des ersten und des zweiten Werts auf das Ergebnis der Rechenvorschrift bestimmt. Insbesondere kann es sich bei der Rechenvorschrift um eine mit der Gewichtungsvariablen gewichtete Mittelwertbildung handeln.

Wenn in diesem Fall ein Algorithmus, mit dem der vorläufige Schnittwinkel berechnet wird, für die erste und die zweite Steuerungsstrategie identisch ist, können gemäß dieser Alternative die tatsächlich am Schneidwerk eingestellten Winkel identisch sein, solange sie innerhalb der von erstem und zweitem Extremwert gesetzten Grenzen liegen, und sich nur dann unterscheiden, wenn für eine der Steuerungsstrategien ein Grenzwert erreicht ist.

Als Schnittwinkel des Schneidwerks wird der Winkel zwischen der Horizontalen (oder einer zum befahrenen Untergrund parallelen Ebene) und einer Referenzebene des Schneidwerks, z.B. einer Schneidebene, in der sich Klingen des Schneidwerks bewegen, bezeichnet. Ein hoher Schnittwinkel (entsprechend einem starken Anstieg der Schneidebene in Fahrtrichtung der Erntemaschine) mindert Erntegutverluste, indem er ein bodennahes Schneiden und damit eine vollständige Aufnahme des Ernteguts ermöglicht; gleichzeitig erhöht er die Gefahr eines Bodenkontakts. Daher sollte in dem Fall, dass der eingestellte Schnittwinkel ein gewichteter Mittelwert des ersten und des zweiten Schnittwinkels ist, der erste Wert des Schnittwinkels kleiner als der zweite sein.

Entsprechend sollte, wenn der am Schneidwerk tatsächlich eingestellte Schnittwinkel anhand eines gewichteten Mittelwerts des ersten und des zweiten Extremwerts beschränkt wird, der erste Extremwert kleiner als der zweite sein.

Zum Einstellen der Gewichtungsvariable ist vorzugsweise ein stufenlos oder vielstufig einstellbarer Regler, insbesondere ein Schieberegler, vorgesehen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht einer erfindungsgemäßen Erntemaschine;
- Fig. 2a-e: ein Detail des Mähdreschers; und
- Fig. 3: ein Blockdiagramm eines Fahrerassistenzsystems des Mähdreschers.

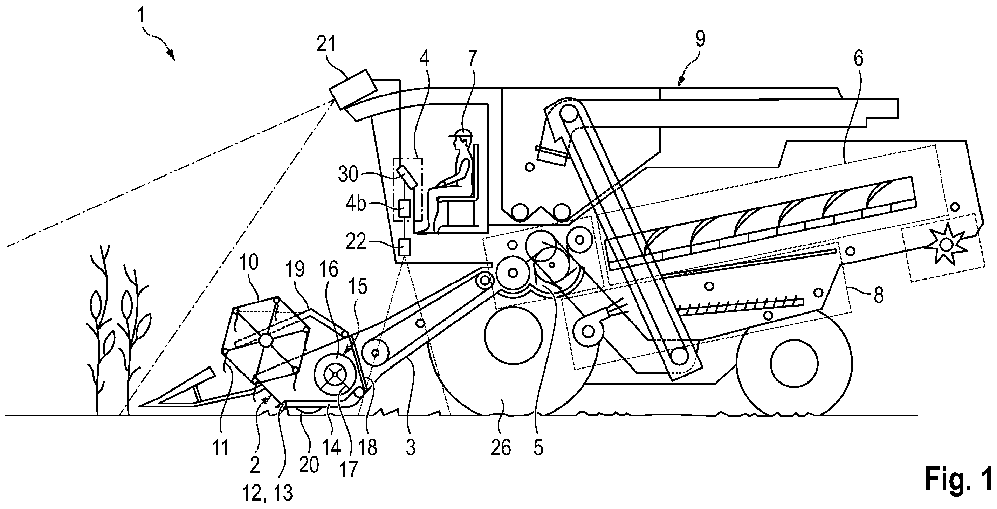

In Fig. 1 ist eine als Mähdrescher 1 ausgeführte landwirtschaftliche Erntemaschine dargestellt, welche ein als Vorsatzgerät ausgebildetes Schneidwerk 2 zum Schneiden und Aufnehmen von Erntegut aufweist. Das Schneidwerk 2 ist vorzugsweise austauschbar gegen ein anderes Schneidwerk 2, so dass die Erntemaschine 1 auf das Ernten unterschiedlicher Fruchtarten angepasst werden kann. Unter dem Begriff Erntegut ist dabei das gesamte vom Feldbestand durch das Schneidwerk 2 aufgenommene Material zu verstehen. Wie in Fig. 1 zu erkennen ist, wird ein Feldbestand durch das Schneidwerk 2 gemäht und das somit gewonnene Erntegut über einen Schrägförderer 3 einem Dreschwerk 5, einer Abscheidestufe 6 und einer Reinigungsstufe 8 innerhalb einer Karosserie 9 des Mähdreschers 1 zugeführt. Ein Überladerohr 32 zum Überladen des aus dem Erntegut abgeschiedenen Korns auf ein Transportfahrzeug ist in einer an der Karosserie des Mähdreschers anliegenden Ruhestellung gezeigt.

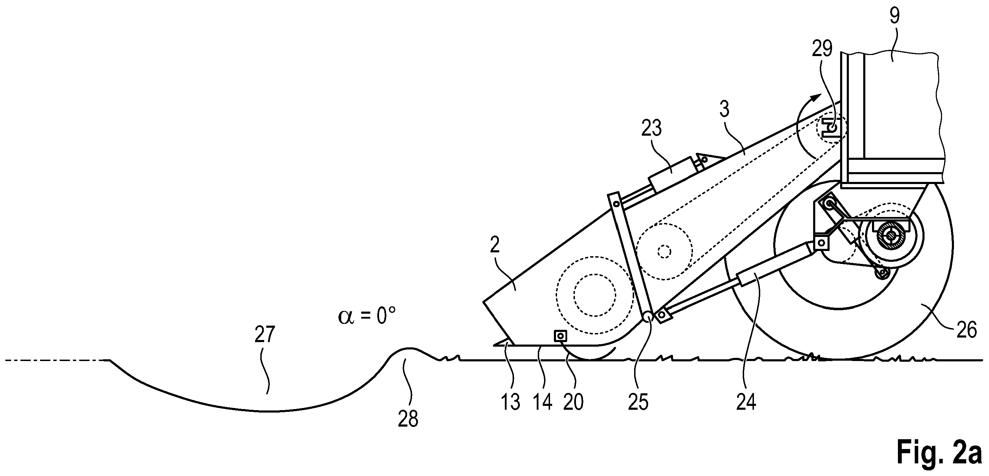

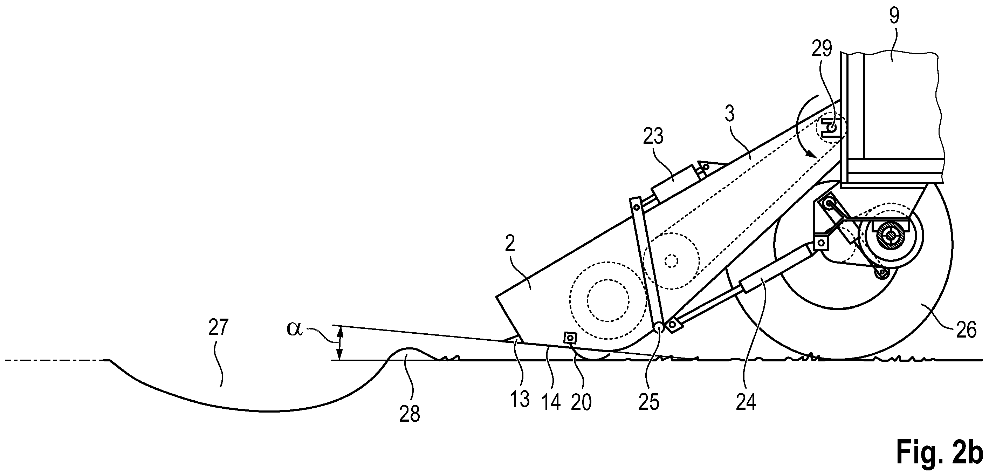

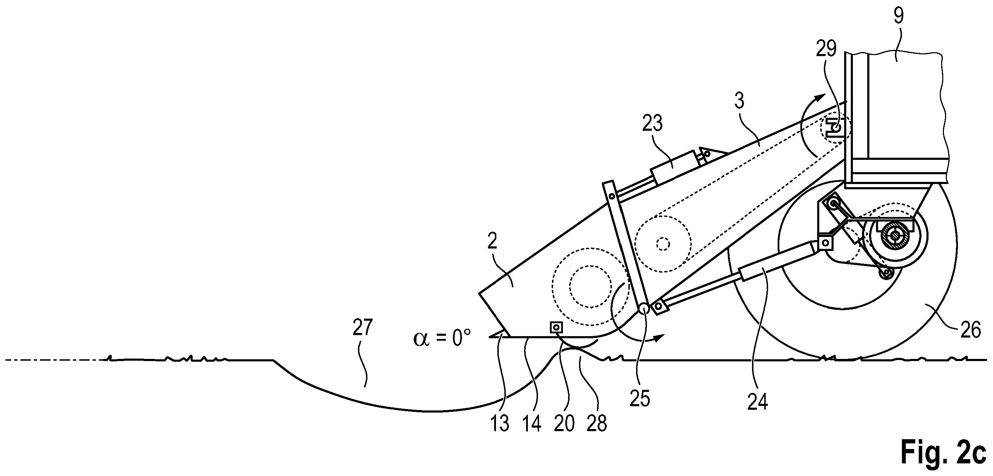

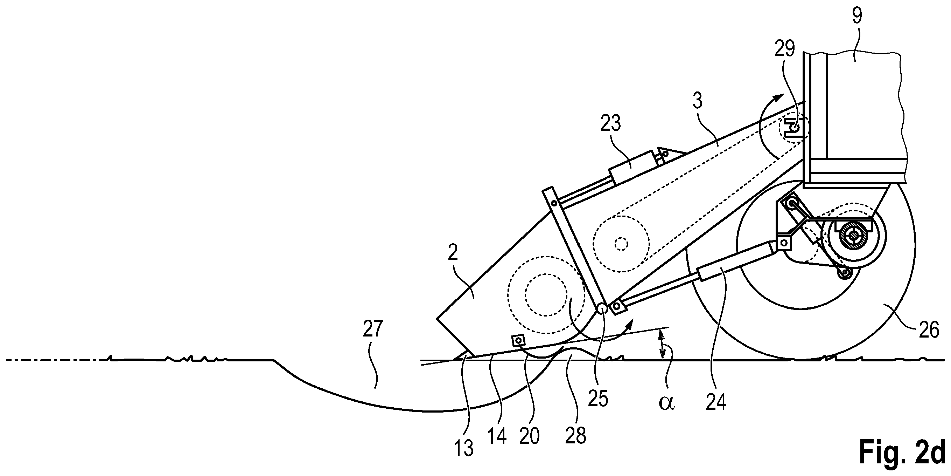

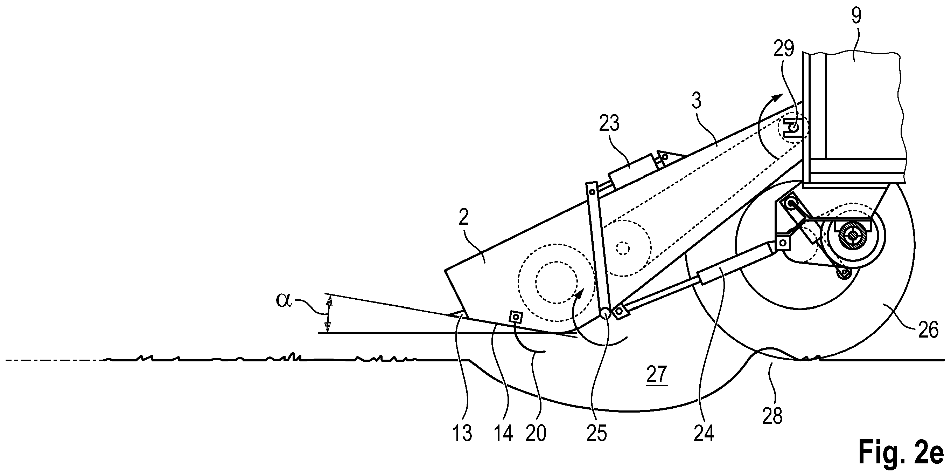

Das Schneidwerk 2 des dargestellten Mähdreschers 1 weist eine quer zu der Fahrtrichtung der Erntemaschine 1 verlaufende Haspel 10 auf, die durch daran angeordnete Zinken 11 bereits auf das noch ungeschnittene Erntegut einwirkt. Die Haspel 10 hat in erster Linie die Aufgabe, das Erntegut einem Messerbalken zuzuführen, der ein bewegliches Messer 13 und ein ortsfestes Messer 12 oder zwei gegeneinander bewegliche Messer aufweist. Das Erntegut wird geschnitten, indem es im Laufe einer Oszillationsbewegung des Messers 13 in einen Zwischenraum zwischen einander zugewandten Klingen der Messer 12/13 eintritt und die Klingen entlang einer Schnittebene übereinander hinweg streichen. Das Erntegut fällt daraufhin auf einen Schneidtisch 14, dessen Vorderseite durch das ortsfeste Messer 12 gebildet ist. Der Schneidetisch erstreckt sich parallel zur Schnittebene der Messer 12/13 oder unter einem kleinen Winkel dazu, so dass die Orientierung des Schneidtischs 14 in Fig. 1 und 2 als repräsentativ für die Schneidebene angesehen werden kann.

Anschließend wird das Erntegut, ggf. unter weiterer Einwirkung durch die Haspel 10, mittels einer Einzugsschnecke 15 dem Schrägförderer 3 zugeführt. Die Einzugsschnecke 15 umfasst eine zentrale Welle und wendelförmige Bleche 16, die in zwei seitlichen Endbereichen der Einzugsschnecke 15 jeweils mit entgegengesetzter Steigung an der zentralen Welle befestigt sind, um, während die Einzugsschnecke 15 rotiert, das geschnittene Erntegut von beiden Seiten her zu einem mittleren Bereich zu schieben, wo es vom Schrägförderer 3 übernommen wird. Im mittleren Bereich der Einzugsschnecke 15 sind mehrere Einzugsfinger 17 angeordnet, die im Laufe einer Umdrehung der Einzugsschnecke einmal aus deren Welle ausfahren, um auf dem Schneidtisch 14 liegendes Erntegut nach hinten zum Schrägförderer 3 zu schieben, und anschließend wieder in die Welle einfahren, um zu verhindern, dass Erntegut angehoben und über die Welle hinweg wieder nach vorn zur Haspel 10 befördert wird. Ein Trägerrahmen 18 des Schneidwerks 2 umfasst den Schneidtisch 14, eine an dessen Hinterkante anschließende Rückwand mit einer Öffnung, an die der Schrägförderer 3 angeschlossen ist, sowie Seitenwände, die jeweils seitliche Ränder des Schneidtischs 14 und der Rückwand verbinden und die Einzugsschnecke 15 lagern. Auch Gelenkarme 19, an denen die Haspel 10 zur Anpassung an eine wechselnde Feldbestandshöhe des von ihr eingezogen Ernteguts höhenverstellbar gelagert ist, sind an diese Seitenwände angelenkt.

Zum Erfassen von Unebenheiten des befahrenen Untergrunds ist ein Fahrerassistenzsystem 4 des Mähdreschers 1 mit diversen Sensoren verbunden. Ein gebräuchlicher Typ von Sensor ist z.B. ein Tastbügel 20, der an der Unterseite des Schneidtischs 14 angeordnet und elastisch gegen den Untergrund angedrückt ist, so dass seine Auslenkung repräsentativ ist für den Abstand zwischen Schneidtisch 14 und Untergrund. Fig. 1 zeigt ferner einen Sensor 21 zum berührungslosen Vermessen des Untergrunds vor dem Mähdrescher 1, z.B. einen Radarsensor, einen Laserscanner, eine Kamera oder dergleichen. Der Sensor 21 ist hier an einer Dachvorderkante einer Fahrerkabine des Mähdreschers 1 gezeigt, alternativ kann er an einem vorspringenden Arm des Schneidwerks 2, z.B. an einem über die Achse der Haspel 10 hinaus vorspringenden Ende der Gelenkarme 18, angebracht sein. Ein weiterer berührungsloser Sensor 22 kann am Boden der Fahrerkabine angeordnet sein, um beiderseits des Schrägförderers 3 das Bodenprofil vor den Vorderrädern 26 des Mähdreschers zu überwachen.

Um das Schneidwerk 2 relativ zum Untergrund zu verstellen, sind wie in Fig. 2a-e gezeigt zwei Stellglieder 23, 24 vorgesehen, die von dem Fahrerassistenzsystem 4 anhand von Daten der Sensoren 20, 21 und eventuell des Sensors 22 gemäß einer oder mehrerer Steuerungsstrategien wie nachfolgend erläutert steuerbar sind. Das Stellglied 23 hat ein am Schrägförderer 3 festes Ende und ein Ende, das an einer oberen Kante des Schneidwerks 2 angreift, und ist ein- und ausfahrbar, um das Schneidwerk 2 relativ zum Schrägförderer 3 um eine Achse 25 nahe einer Hinterkante des Schneidtischs 14 zu schwenken. Das zweite Stellglied 24 verbindet ein vorderes Ende des Schrägförderers 3 mit der Karosserie 9 und dient zum Schwenken des Schrägförderers 3 relativ zur Karosserie 9 um eine Achse 29.

In Fig. 2a ist der Untergrund zwischen dem Messer 13 und den Vorderrädern 26 eben, und das Fahrerassistenzsystem 4 hält den Schneidtisch 14 parallel zum Boden und, basierend auf Abstandsmessdaten vom Tastbügel 20, in geringem Abstand vom Boden, wobei der Abstand je nach verwendeter Steuerungsstrategie unterschiedlich sein kann.

Gleichzeitig erfasst das Fahrerassistenzsystem 4 über den Sensor 21 eine Unebenheit im Vorfeld des Mähdreschers 1, z. B. eine Wildschweinsuhle mit einer zentralen Vertiefung 27, umgeben von einer Erhebung 28 aus lockerem Aushubmaterial.

Um zu verhindern, dass wenn der Mähdrescher 1 weiterfährt, das Aushubmaterial in das Schneidwerk 2 gelangt, muss letzteres angehoben werden. Das ganze Schneidwerk 2 durch Schwenken des Schrägförderers 3 um die Achse 29 anzuheben erfordert eine hohe Leistung des Stellgliedes 24. Wie in Fig. 2b gezeigt, wird mit erheblich geringerem Energieaufwand zunächst nur das Messer 13 angehoben, indem das Schneidwerk um die Achse 25 geschwenkt wird, so dass der Schnittwinkel α negativ wird. Um die Aufnahme von Aushubmaterial in das Schneidwerk zu verhindern, kann dies bereits genügen.

Das Fahrerassistenzsystem 4 kann einer Steuerungsstrategie zufolge die Information über die vorausliegende Erhebung 28 nutzen, um den Sollwert für den vom Tastbügel 20 erfassten Abstand zum Boden zu erhöhen. Einer alternativen Strategie zufolge bleibt diese Information unberücksichtigt, und in dem Bestreben, den vom Tastbügel 20 erfassten Abstand konstant zu halten, veranlasst das Fahrerassistenzsystem 4 zunächst das Stellglied 24, den Schrägförderer 3 abzusenken, so dass, wie in Fig. 2b gezeigt, die hintere Kante des Schneidtischs 14 dem Boden näher kommt als in Fig. 2a.

Um zu vermeiden, dass beim Weiterfahren des Mähdreschers der Schneidtisch 14 mit der Erhebung 28 kollidiert, genügt aufgrund der Verstellung des Schnittwinkels α nach Negativ ein deutlich langsameres Anheben des Schneidwerks 2, als wenn dieses allein vom Stellglied 24 angehoben werden müsste, d.h. die für das Stellglied 24 benötigte Leistung ist deutlich kleiner als wenn dieses allein für die nötige Anhebung des Schneidwerks 2 sorgen muss. Indem bei Bedarf beide Stellglieder 23, 24 gleichzeitig betätigt werden, kann das Messer 13 sehr schnell angehoben werden.

Während die Steuerung des Stellgliedes 23 vorausschauend anhand der vom Sensor 21 erfassten Topographie des Vorfelds erfolgt, kann das Stellglied 24, wenn es wie oben beschrieben nur anhand von Daten des Tastbügels 20 gesteuert ist, auf die Erhebung 28 erst reagieren, wenn diese den Tastbügel 20 unter dem Schneidtisch 14 berührt.

Um der Erhebung 28 erfolgreich auszuweichen, genügt es, dass in dem Moment, in dem das Messer 13 des Schneidwerks 2 die Erhebung 28 erreicht, das Messer höher ist als die Erhebung 28; die Hinterkante des Schneidtischs 14 kann, wie in Fig. 2b zu sehen, noch tiefer liegen als die Spitze der Erhebung 28. Es genügt, wenn die Hinterkante erst während sich der Schneidtisch 14 über die Erhebung 28 hinwegbewegt, z.B. als Reaktion auf eine Auslenkung des Tastbügels 20 durch die Erhebung 28, die nötige Höhe erreicht.

Noch während das Stellglied 24 die Achse 25 des Schneidwerks 2 anhebt, um das Schneidwerk 2 über die Erhebung 28 hinwegzuheben, kann das Stellglied 23 bereits damit beginnen, das Schneidwerk 2 um die Achse 25 in Richtung eines positiven Schneidwinkels α zu schwenken. Fig. 2c zeigt einen Zustand, in dem der Schneidtisch 14 parallel zum Boden (d.h. der Schneidwinkel α=0) ist. Der Tastbügel 20 hat hier zwar bereits den Scheitel der Erhebung 28 passiert und würde bei gleichbleibender Stellung einen zunehmenden Abstand zum Boden erfassen. In der vorliegenden Situation hingegen führt die Schwenkbewegung um die Achse 25 jedoch dazu, dass der Tastbügel 20 dennoch einen abnehmenden Abstand zum Boden erfasst und das Fahrerassistenzsystem 4 durch Anheben des Schrägförderers 3 gegensteuert.

In Fig. 2d hat die Hinterkante des Schneidtischs 14 den Scheitel der Erhebung erreicht; der Schrägförderer 3 ist nochmal geringfügig weiter aufwärts geschwenkt; das Schneidwerk 2 hat nun eine Stellung mit positiven Schnittwinkel α, die es, wenn die Vertiefung 27 mit Pflanzen bewachsen wäre, erlauben würde, diese tiefer zu schneiden als wenn die Höhe des Schneidwerks lediglich mittels des Stellglieds 24 angepasst würde.

So ermöglicht es das Zusammenwirken beider Stellglieder 23, 24, gesteuert vom Fahrerassistenzsystem 4 anhand der vom Sensor 21 erfassten Topographie des Vorfelds, die Höhe des Messers 13 der Bodenkontur nachzuführen und so Verluste von Erntegut zu minimieren.

Sobald die Vorderräder 26 des Mähdreschers 1 die Vertiefung 27 erreichen und darin einzutauchen beginnen, führt dies zu einer Nickbewegung des gesamten Mähdreschers nach vorn. Um zu verhindern, dass dabei das Schneidwerk 2 Bodenkontakt bekommt, schätzt das Fahrerassistenzsystem 4 anhand des aus den Daten des Sensors 21 bekannten Profil der Vertiefung das Ausmaß der zu erwartenden Nickbewegung ab, und steuert die Stellglieder 23, 24 an, um wie in Fig. 2e gezeigt, das Schneidwerk 2 so weit anzuheben, dass der Bodenkontakt vermieden werden kann. Auch hier können beide Stellglieder zusammenwirken, um das Messer 13 schneller anzuheben als die Hinterkante des Schneidtischs 14, und so das Risiko einer Beschädigung des Messers zu minimieren.

Wenn die Nickbewegung stattfindet, während Korn mittels des Überladerohrs 32 auf ein neben dem Mähdrescher 1 herfahrendes Transportfahrzeug übergeladen wird, und das Überladerohr 32 die Nickbewegung mitmacht, kann dies zur Folge haben, dass Korn das Begleitfahrzeug verfehlt. Um dem vorzubeugen, kann vorgesehen werden, dass das Fahrerassistenzsystem 4 zusammen mit der in Fig. 2e gezeigten Anhebung eine Schwenkbewegung des Überladerohrs 32 entgegen der Fahrtrichtung steuert. Indem sich diese Rückwärtsbewegung mit der Vorwärts-Nickbewegung überlagert, kann der Auftreffpunkt des Korns am Transportfahrzeug weitgehend konstant gehalten und ein Kornverlust beim Überladen vermieden werden.

Wie anhand dieser Figuren leicht nachvollziehbar, ist ein positiver Schnittwinkel α einerseits wünschenswert, um - insbesondere wenn die Stellung des Stellgliedes 24 durch den Tastbügel 20 gesteuert ist - bei gegebener Auslenkung des Tastbügels das Messer 13 nah am Boden platzieren und Erntegut verlustarm aufnehmen zu können, andererseits kann gerade der geringe Abstand vom Boden schnelle Ausweichmanöver erforderlich machen, um einen Bodenkontakt zu vermeiden, und dazu führen, dass die Fahrgeschwindigkeit des Mähdreschers begrenzt werden muss, um dem Schneidwerk eine rechtzeitige Anpassung seiner Stellung zu ermöglichen.

Der Sensor 21 kann auch ausgelegt sein, um die Höhe des Pflanzenbestands zu erfassen. Wenn diese im Vorfeld des Schneidwerks 2 niedriger ist als normal, so kann dies ein Indiz für liegende Pflanzen sein. Während etwa ein stehender Getreidebestand mit relativ großem Abstand der Messer 12/13 vom Boden und einem Schnittwinkel α nahe 0 geerntet werden kann, da die werthaltigen Körner sich am oberen Ende des Halms fern vom Boden befinden, erhöht das Fahrerassistenzsystem 4 bei lokal geringer Höhe des Pflanzenbestands den Schnittwinkel α, um den die Messer 12/13 näher an den Boden zu bringen und so auch bodennahe Ähren aufnehmen zu können. Um in dieser Stellung rechtzeitig auf vom Sensor 21 erfasste Bodenunebenheiten reagieren zu können, kann es nötig sein, dass das Fahrerassistenzsystem 4 beim Übergang zum erhöhten Schnittwinkel auch die Fahrtgeschwindigkeit des Mähdreschers 1 herabsetzt.

Wenn der Sensor 21 im zu erntenden Pflanzenbestand Unkraut detektiert, kann es umgekehrt sinnvoll sein, den Schnittwinkel α negativ zu machen und eventuell zusätzlich noch den Schrägförderer 3 anzuheben, damit das Unkraut ungeschnitten unter dem Schneidwerk 2 durchgeht und nicht die Ernte verunreinigt.

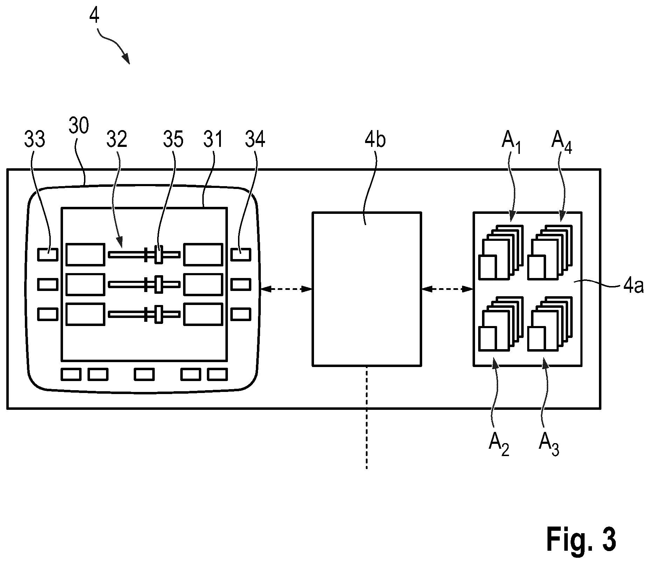

Das in Fig. 3 als Blockdiagramm gezeigte Fahrerassistenzsystem 4 des Mähdreschers 1 dient zumindest zur Ansteuerung des Schneidwerks 2, vorzugsweise auch weiterer Aggregate wie etwa des Dreschwerks 5, der Abscheidestufe 6 und der Reinigungsstufe 8. Das Fahrerassistenzsystem 4 umfasst einen Speicher 4a zum Hinterlegen von Daten - also einen Speicher im informationstechnischen Sinne - und eine Rechenvorrichtung 4b zur Verarbeitung der in dem Speicher 4a hinterlegten Daten. Grundsätzlich ist das Fahrerassistenzsystem 4 dazu eingerichtet, einen Fahrer 7 des Mähdreschers 1 bei der Bedienung zu unterstützen.

Die Stellglieder 23, 24 können von dem Fahrerassistenzsystem 4 wie oben einzeln oder gleichzeitig betätigt werden, um etwa den Schnittwinkel α unter Beibehaltung der Höhe der Messer über dem Untergrund zu variieren oder die Höhe über dem Boden zu verändern und dabei den Schnittwinkel α konstant zu halten.

Der Speicher 4a enthält diverse Steuerungsstrategien zumindest für das Schneidwerk 2. Die Steuerungsstrategien können auch Algorithmen zum Steuern des Dreschwerks 5 und der Reinigungsstufe 6 passend zur Beschaffenheit des von dem Schneidwerk 2 gelieferten Erntegutstrom umfassen; diese werden hier jedoch, da nicht direkt mit der Erfindung zusammenhängend, nicht beschrieben.

Jede Steuerungsstrategie umfasst einen Algorithmus zum Einstellen von Höhe und Schnittwinkel des Schneidwerks 2 in Abhängigkeit von den Messergebnissen der Sensoren 20, 21. Die Algorithmen sind je nach Ausstattung des Mähdreschers mit Sensoren unterschiedlich, z.B. wird im Allgemeinen ein Algorithmus, der zum Verhindern eines Bodenkontakts des Schneidwerks 2 allein auf Messwerte des Tastbügels 20 angewiesen ist, zum Erreichen einer vorgegebenen Sicherheit vor Bodenkontakt im Mittel eine andere Höhe der Messer 12/13 über dem Boden einstellen als ein Algorithmus, dem zusätzlich Messwerte des Bodenprofils vor dem Schneidwerk 2 vom Sensor 21 zur Verfügung stehen und der bei Erkennung einer Bodenerhebung vor dem Schneidwerk 2 eine ausreichend schnelle Anhebung des Schneidwerks auslösen kann. Ein Algorithmus, der auf Daten des Sensors 21 aufbaut, sollte die Stellung des Schneidwerks unterschiedlich steuern, je nachdem, ob die von dem Sensor 21 erfasste Bodenoberfläche tatsächlich die des Erdbodens ist oder eventuell die einer darauf liegenden Schicht von Mulch oder Resten einer vorhergehenden Kultur, die vom Schneidwerk 2 keinesfalls aufgenommen und dem Dreschwerk zugeführt werden sollten.

Ferner kann der Sensor 21 auch eingerichtet sein, um eine durchschnittliche Höhe über dem Boden von Fruchtständen des Ernteguts ortsaufgelöst zu erfassen, so dass das Fahrerassistenzsystem 4 anhand dieser Daten die Höhe des Schneidwerks notfalls absenken kann, um etwa die Ähren auch von liegendem Getreide aufzunehmen.

Selbst wenn man unterstellt, ein Algorithmus wäre in der Lage, anhand der Daten von den Sensoren 20, 21 ein fehlerfreies Profil der Bodenoberfläche zu erstellen, bleibt das Problem, dass ein örtlich unterschiedliches Einsinken einzelner Räder des Mähdreschers in den Boden, sei es aufgrund nicht berücksichtigter Unebenheiten oder von Nachgiebigkeit des Bodens wegen Feuchtigkeit oder unterirdischen Tierbauten, zu nicht vorhersagbaren Änderungen des Abstands zwischen Schneidwerk 2 und Boden und des Schnittwinkels führen kann. Um diesem Problem Rechnung zu tragen, werden erfindungsgemäß wenigstens zwei Algorithmen A₁, A₂ zur Verfügung gestellt, von denen der Algorithmus A₁ auf eine möglichst vollständige Aufnahme des Ernteguts optimiert ist, dafür aber zu Lasten der Bodenfreiheit des Schneidwerks 2 dazu neigt, einen hohen Schnittwinkel einzustellen oder, um tief liegendes Erntegut aufzunehmen, eine Höhe des Schneidwerks über dem Boden in Kauf nimmt, die bei einem Einsacken zu Bodenkontakt führen kann, wohingegen der Algorithmus A₂ auf die Meidung eines Bodenkontakts optimiert ist, dafür aber notfalls Verluste an Erntegut in Kauf nehmen muss.

Die Rechenvorrichtung 4b steuert gemäß Fig. 3 eine Benutzerschnittstelle 30 in der Fahrerkabine an, auf einem Bildschirm 31 ein Bild mit wenigstens einem Schieberegler 32 anzuzeigen. Dem Schieberegler 32 jenseits des Rands des Bildschirms 31 zugeordnete Tasten 33, 34 können einerseits - sofern mehr als die Algorithmen A₁, A₂ zum Auswählen zur Verfügung stehen - verwendet werden, um jeder Anschlagstellung des Schiebereglers einen Algorithmus zuzuordnen, nach dem das Fahrerassistenzsystem 4 das Schneidwerk 2, insbesondere die Höhe der Messer 12/13 und den Schnittwinkel α, steuert, wenn sich ein Stellknopf 35 des Schiebereglers an einer jeweils zu dieser Taste 33, 34 benachbarten Anschlagstellung befindet. Wenn diese Zuordnung getroffen ist, können dieselben Tasten 33, 34 genutzt werden, um durch ein- oder mehrmaliges Antippen die Position des Stellknopfs 35 schrittweise in Richtung der angetippten Taste zu verschieben und so einen Gewichtungsfaktor c festzulegen, mit dem die den Tasten 33, 34 zugeordneten Algorithmen A₁, A₂ die Steuerung des Schneidwerks 2 beeinflussen. Alternativ kann natürlich auch der Schieberegler als physisches Bauteil vorgesehen werden, oder der Bildschirm 31 kann berührungsempfindlich sein, so dass der Fahrer 7 den angezeigten Stellknopf 35 verschieben kann, indem er unmittelbar ihn berührt und durch eine Fingerbewegung hin- und herzieht.

Der Fahrer 7 kann angesichts der zu bearbeitenden Ackerfläche, ggf. auch unter Rückgriff auf bei früheren Bearbeitungen derselben Fläche oder im Laufe der aktuellen Bearbeitung dieser Fläche gesammelten Erfahrungen, beurteilen, inwieweit die Fläche den die Anwendungsvoraussetzungen für den Algorithmus A₁ oder A₂ entspricht, und den Schieberegler 32 vor Aufnahme der Bearbeitung der Fläche oder auch während der Bearbeitung entsprechend einstellen.

Wenn der anhand von aktuellen Messwerten der Sensoren 20, 21, 22 vom Algorithmus A₁ festgelegte Soll-Schnittwinkel der Messer 12/13 α₁ und der vom Algorithmus A₂ festgelegte Soll-Schnittwinkel α₂ ist, legt das Fahrerassistenzsystem 4 als Soll-Schnittwinkel des Messerbalkens α* einen gewichteten Mittelwert fest, in dem jeder Soll-Schnittwinkel αᵢ, i=1, 2, umso höher gewichtet ist, je näher der Stellknopf 35 am dem dem Algorithmus Aᵢ zugeordneten Ende des Schiebereglers 32 ist. Wenn der Abstand des Stellknopfs 35 vom dem Algorithmus A₁ zugeordneten Ende des Schiebereglers 32 ein Bruchteil c von dessen Länge und der Abstand vom dem Algorithmus A₂ zugeordneten Ende 1-c ist, kann insbesondere α₁ mit 1-c und α₂ mit c gewichtet sein.

Stellt der Fahrer während der Bearbeitung der Fläche fest, dass die Nachgiebigkeit anders ist als erwartet, kann er die Steuerung des Schneidwerks 2 fortlaufend daran anpassen, indem er etwa durch Antippen der Taste 32 den Algorithmus A₁ oder durch Antippen der Taste 33 den Gewichtungsfaktor c verändert.

Denkbar ist auch, dass beide Algorithmen A₁, A₂ zwar eine einheitliche Rechenvorschrift benutzen, um einen vorläufigen Schnittwinkel zu berechnen, diesen aber durch unterschiedliche Obergrenzen αₘₐₓ₁, αₘₐₓ₂ begrenzen, um den tatsächlich zum Steuern des Schneidwerks 2 verwendeten Soll-Schnittwinkel α* festzulegen, und dass die Position des Stellknopfs 34 eine interpolierte Obergrenze αₘₐₓ* anhand einer Rechenvorschrift als Funktion der ersten und der zweiten Obergrenze αₘₐₓ₁, αₘₐₓ₂ festlegt, wobei die Gewichtungsvariable c den Einfluss des ersten und des zweiten Extremwerts αₘₐₓ₁, αₘₐₓ₂ auf das Ergebnis der Rechenvorschrift bestimmt. Wie bereits oben beschrieben kann die Rechenvorschrift eine gewichtete Mittelwertbildung sein. Während im zuvor beschriebenen Fall, dass der Soll-Schnittwinkel α* durch Interpolieren der nach den Algorithmen A₁, A₂ erhaltenen Winkel α₁ und α₂ berechnet wird und - sofern diese unterschiedlich sind - jede Änderung des Gewichtungsfaktors c eine Änderung des Soll-Schnittwinkels α* bewirkt, bleibt hier eine Änderung des Gewichtungsfaktors c solange ohne Einfluss auf den Soll-Schnittwinkel α*, wie dieser vor und nach der Änderung unter einer aktuellen interpolierten Obergrenze α ₘₐₓ liegt.

### Bezugszeichen

- 1: Mähdrescher
- 2: Schneidwerk
- 3: Schrägförderer
- 4: Fahrerassistenzsystem
- 5: Dreschwerk
- 6: Abscheidestufe
- 7: Fahrer
- 8: Reinigungsstufe
- 9: Karosserie
- 10: Haspel
- 11: Zinken
- 12: Messer
- 13: Messer
- 14: Schneidtisch
- 15: Einzugsschnecke
- 16: Blech
- 17: Einzugsfinger
- 18: Trägerrahmen
- 19: Gelenkarm
- 20: Tastbügel
- 21: Sensor
- 22: Sensor
- 23: Stellglied
- 24: Stellglied
- 25: Achse
- 26: Vorderrad
- 27: Vertiefung
- 28: Erhebung
- 29: Achse
- 30: Benutzerschnittstelle
- 31: Bildschirm
- 32: Überladerohr

## Patentansprüche

1. Landwirtschaftliche Erntemaschine mit einem Schneidwerk (2) zum Schneiden von Erntegut und mit einem Fahrerassistenzsystem (4), wobei das Fahrerassistenzsystem (4) einen Speicher (4a), in dem Steuerungsstrategien für den Betrieb des Schneidwerks hinterlegt sind, und eine Rechenvorrichtung (4b) zum Steuern eines Schnittwinkels des Schneidwerks (2) nach Maßgabe der in dem Speicher (4a) hinterlegten Steuerungsstrategien umfasst, wobei die Rechenvorrichtung eingerichtet ist, wenigstens eine erste und eine zweite Steuerungsstrategie (A₁, A₂) über eine Gewichtungsvariable (c) miteinander zu verknüpfen, wobei die Gewichtungsvariable (c) durch einen Fahrer (7) einstellbar ist, **dadurch gekennzeichnet, dass** die erste Steuerungsstrategie (A₁) im Hinblick auf die Vermeidung einer Beschädigung des Schneidwerks und/oder des Bodens durch gegenseitigen Kontakt optimiert ist, und die zweite Steuerungsstrategie (A₂) im Hinblick auf die Minimierung von Erntegutverlusten optimiert ist.

2. Landwirtschaftliche Erntemaschine nach Anspruch 1, **dadurch gekennzeichnet, dass** das Verknüpfen darin besteht, einen ersten Wert des Schnittwinkels (α₁) nach der ersten Steuerungsstrategie (A₁) festzulegen, einen zweiten Wert des Schnittwinkels (α₂) nach der zweiten Steuerungsstrategie (A₂) festzulegen und einen Soll-Schnittwinkel (α*) für das Schneidwerk (2) anhand einer Rechenvorschrift als Funktion des ersten und des zweiten Werts des Schnittwinkels festzulegen, wobei die Gewichtungsvariable den Einfluss des ersten (α₁) und des zweiten Werts (α₂) auf das Ergebnis der Rechenvorschrift bestimmt.

3. Landwirtschaftliche Erntemaschine nach Anspruch 1, **dadurch gekennzeichnet, dass** das Verknüpfen darin besteht, einen ersten zum Einstellen am Schneidwerk zulässigen Extremwert (αₘₐₓ₁) des Schnittwinkels nach der ersten Steuerungsstrategie festzulegen, einen zweiten zum Einstellen am Schneidwerk zulässigen Extremwert des Schnittwinkels (αₘₐₓ₂) nach der zweiten Steuerungsstrategie festzulegen und den am Schneidwerk (2) tatsächlich einzustellenden Soll-Schnittwinkel (α*) anhand eines gewichteten Extremwerts zu beschränken, der anhand einer Rechenvorschrift als Funktion des ersten und des zweiten Extremwerts des Schnittwinkels festgelegt wird, wobei die Gewichtungsvariable den Einfluss des ersten (αₘₐₓ₁) und des zweiten Extremwerts (αₘₐₓ₂) auf das Ergebnis der Rechenvorschrift bestimmt.

4. Landwirtschaftliche Erntemaschine nach Anspruch 2 und Anspruch 1, **dadurch gekennzeichnet, dass** der erste Wert (α₁) des Schnittwinkels kleiner als der zweite (α₂) ist.

5. Landwirtschaftliche Erntemaschine nach Anspruch 2 und Anspruch 1, **dadurch gekennzeichnet, dass** der erste Extremwert (αₘₐₓ₁) kleiner als der zweite (αₘₐₓ₂) ist.

6. Landwirtschaftliche Erntemaschine nach einem der vorhergehenden Ansprüche, **gekennzeichnet durch** einen stufenlos oder vielstufig einstellbaren Regler, insbesondere einen Schieberegler (32), zum Einstellen der Gewichtungsvariable (c).

## Claims

1. An agricultural harvesting machine with a cutting assembly (2) for cutting harvested material and with a driver assistance system (4), wherein the driver assistance system (4) comprises a memory (4a), in which control strategies for the operation of the cutting assembly are stored, and a computing device (4b) for controlling a cutting angle of the cutting assembly (2) in accordance with the control strategies stored in the memory (4a), wherein the computing device is configured to interlink at least a first and a second control strategy (A₁, A₂) via a weighting variable (c), wherein the weighting variable (c) can be adjusted by a driver (7), **characterized in that** the first control strategy (A₁) is optimized with regard to avoiding damage to the cutting assembly and/or the ground through mutual contact, and the second control strategy (A₂) is optimized with regard to minimizing harvested material losses.

2. The agricultural harvesting machine according to claim 1, **characterized in that** the interlinking consists of specifying a first value of the cutting angle (α₁) in accordance with the first control strategy (A₁), specifying a second value of the cutting angle (α₂) in accordance with the second control strategy (A₂) and specifying a target cutting angle (α_{*}) for the cutting assembly (2) with the aid of a calculation rule as a function of the first value and of the second value of the cutting angle, wherein the weighting variable determines the influence of the first value (α₁) and of the second value (α₂) on the result of the calculation rule.

3. The agricultural harvesting machine according to claim 1, **characterized in that** the interlinking consists of specifying a first permissible extreme value (αₘₐₓ₁) of the cutting angle for setting on the cutting assembly in accordance with the first control strategy, specifying a second permissible extreme value of the cutting angle (αₘₐₓ₂) for setting on the cutting assembly in accordance with the second control strategy, and limiting the target cutting angle (α*) to actually be set on the cutting assembly (2) with the aid of a weighted extreme value which is specified with the aid of a calculation rule as a function of the first extreme value and of the second extreme value of the cutting angle, wherein the weighting variable determines the influence of the first extreme value (αₘₐₓ₁) and of the second extreme value (αₘₐₓ₂) on the result of the calculation rule.

4. The agricultural harvesting machine according to claim 2 and claim 1, **characterized in that** the first value (α₁) of the cutting angle is smaller than the second value (α₂).

5. The agricultural harvesting machine according to claim 2 and claim 1, **characterized in that** the first extreme value (αₘₐₓ₁) is smaller than the second (αₘₐₓ₂).

6. The agricultural harvesting machine according to one of the preceding claims, **characterized by** a controller which can be adjusted steplessly or in multiple steps, in particular a slider (32), for adjusting the weighting variable (c).

## Revendications

1. Récolteuse agricole dotée d'un tablier de coupe (2), destiné à couper des produits à récolter, et d'un système d'assistance au conducteur (4), le système d'assistance au conducteur (4) comportant une mémoire (4a), dans laquelle sont enregistrées des stratégies de commande pour le fonctionnement du tablier de coupe, et un dispositif de calcul (4b) destiné à commander un angle de coupe du tablier de coupe (2) en fonction des stratégies de commande enregistrées dans la mémoire (4a), le dispositif de calcul étant conçu pour combiner entre elles au moins une première et une deuxième stratégie de commande (A₁, A₂) par l'intermédiaire d'une variable de pondération (c), la variable de pondération (c) pouvant être réglée par un conducteur (7), **caractérisée en ce que** la première stratégie de commande (A₁) est optimisée en vue d'éviter une détérioration du tablier de coupe et/ou du sol suite à un contact réciproque, et la deuxième stratégie de commande (A₂) étant optimisée en vue de réduire à un minimum les pertes de récolte.

2. Récolteuse agricole selon la revendication 1, **caractérisée en ce que** la combinaison consiste à définir une première valeur de l'angle de coupe (α₁) selon la première stratégie de commande (A₁), à définir une deuxième valeur de l'angle de coupe (α₂) selon la deuxième stratégie de commande (A₂), et à définir un angle de coupe de consigne (α*) pour le tablier de coupe (2), à l'aide d'une règle de calcul en tant que fonction de la première et de la deuxième valeur de l'angle de coupe, la variable de pondération déterminant l'influence de la première (α₁) et de la deuxième (α₂) valeur sur le résultat de la règle de calcul.

3. Récolteuse agricole selon la revendication 1, **caractérisée en ce que** la combinaison consiste à définir une première valeur extrême (αₘₐₓ₁) de l'angle de coupe, admissible pour le réglage sur le tablier de coupe, selon la première stratégie de commande, à définir une deuxième valeur extrême (αₘₐₓ₂) de l'angle de coupe, admissible pour le réglage sur le tablier de coupe, selon la deuxième stratégie de commande, et à limiter l'angle de coupe de consigne (α_{*}) devant être réglé effectivement sur le tablier de coupe (2), à l'aide d'une valeur extrême pondérée qui est définie à l'aide d'une règle de calcul en tant que fonction de la première et de la deuxième valeur extrême de l'angle de coupe, la variable de pondération déterminant l'influence de la première (αₘᵢₓ₁) et de la deuxième (αₘₐₓ₂) valeur extrême sur le résultat de la règle de calcul.

4. Récolteuse agricole selon la revendication 2 et la revendication 1, **caractérisée en ce que** la première valeur (α₁) de l'angle de coupe est inférieure à la deuxième (α₂).

5. Récolteuse agricole selon la revendication 2 et la revendication 1, **caractérisée en ce que** la première valeur extrême (αₘₐₓ₁) est inférieure à la deuxième (αₘₐₓ₂).

6. Récolteuse agricole selon une des revendications précédentes, **caractérisée en ce qu'**elle présente un régulateur à réglage continu ou comportant plusieurs niveaux de réglage, en particulier un régulateur à curseur (32), pour le réglage de la variable de pondération (c).
